# EUROPEAN PATENT SPECIFICATION

(11) **EP 3 820 778 B1**
(45) Date of publication and mention of the grant of the patent: **16.11.2022**
(21) Application number: 19761958.8
(22) Date of filing: 12.07.2019
(51) Int. Cl.: B65B 37/02, B65B 37/04, B65G 65/44, B65B 59/04, B65G 47/19, B65G 65/40

(54) **UNIT FOR FEEDING TOBACCO TO A MANUFACTURING MACHINE FOR THE PRODUCTION OF DISPOSABLE CARTRIDGES FOR ELECTRONIC CIGARETTES AND MANUFACTURING MACHINE PROVIDED WITH SAID FEEDING UNIT**
EINHEIT ZUM ZUFÜHREN VON TABAK IN EINER HERSTELLUNGSMASCHINE ZUR HERSTELLUNG VON EINWEGKARTUSCHEN FÜR ELEKTRONISCHE ZIGARETTEN UND HERSTELLUNGSMASCHINE MIT DIESER ZUFÜHREINHEIT
UNITÉ POUR ALIMENTER EN TABAC UNE MACHINE DE FABRICATION POUR LA PRODUCTION DE CARTOUCHES JETABLES POUR CIGARETTES ÉLECTRONIQUES ET MACHINE DE FABRICATION ÉQUIPÉE DE LADITE UNITÉ D'ALIMENTATION

(30) Priority: 12.07.2018 IT 201800007120
(43) Date of publication of application: 19.05.2021
(73) Proprietor: G.D Società per Azioni, 40133 Bologna (IT)
(72) Inventor: MILANDRI, Francesco, 47023 Cesena (IT); AMORATI, Valerio, 40050 Argelato (BO) (IT); LANZARINI, Luca, 40056 Crespellano (BO) (IT); FEDERICI, Luca, deceased (IT)
(74) Representative: Maccagnan, Matteo
(86) International application number: PCT/IB2019/055960
(87) International publication number: WO 2020/012431

(56) References cited:
- CN-A- 107 298 189
- FR-A1- 2 874 211
- US-A- 3 998 436
- US-A- 4 782 644
- US-A1- 2003 091 397
- US-A1- 2011 204 083

## Description

### CROSS-REFERENCE TO RELATED APPLICATIONS

This Patent Application claims priority from Italian Patent Application No. 102018000007120 filed on July 12, 2018.

### TECHNICAL FIELD

The present invention relates to a unit to feed tobacco in a manufacturing machine for the production of disposable cartridges for electronic cigarettes and also relates to a manufacturing machine provided with said feeding unit.

### PRIOR ART

Recently, single use (i.e. disposable) cartridges have been proposed for electronic cigarettes comprising a tubular-shaped casing made of a plastic material having a micro-perforated bottom wall and inside of which a quantity of powdered tobacco is contained, on top of which is a tab made of a filtering material; the casing is closed at an upper end (i.e. opposite to the micro-perforated bottom wall) by means of a sealing ring which is welded to the casing.

The production of such cartridges provides for filling each casing with a calibrated quantity of powdered tobacco, slightly compressing the quantity of powdered tobacco inside the casing so as to obtain the desired density and then capping the casing by applying, to the open upper end, both the filtering tab and the sealing ring. The cartridges are subsequently individually weighed in order to allow discarding non-compliant ones which internally contain an insufficient or excessive amount of powdered tobacco.

Once the production of the cartridges is finished, the latter are inserted into sealed packages, typically blister packets.

Patent applications WO2017051348A1, WO2017051349A1 and WO2017051350A1 provide an example of a manufacturing machine for the production of disposable cartridges for electronic cigarettes of the type described above. In this manufacturing machine, it is necessary to feed the powdered tobacco from the top into a cylindrical-shaped basin, which is arranged horizontally and is mounted rotatably in a stepwise manner around a vertical rotation axis; said basin partially overlaps a manufacturing drum provided with seats at a filling station in which individual quantities of powdered tobacco are transferred to tubular casings arranged in the seats of the manufacturing drum. The feeding of the powdered tobacco to the basin from the top is relatively complex, as it is necessary to avoid *"mistreating"* the powdered tobacco; i.e. to avoid excessively compressing the powdered tobacco as an excessive compression can deteriorate the powdered tobacco thus depleting the aromas (consequently, the tobacco powder deprived of the aromas is impoverished and gives the smoker the impression that it has already been previously smoked).

Patent US4782644A provides an example of a manufacturing machine for the production of disposable cartridges for electronic cigarettes; this manufacturing machine comprises a unit to feed tobacco which is provided with a pair of vibrating feeding conveyors.

### DESCRIPTION OF THE INVENTION

The object of the present invention is to provide a unit to feed tobacco in a manufacturing machine for the production of disposable cartridges for electronic cigarettes, the which feeding unit allows to feed an adequate quantity of tobacco powder ensuring a delicate treatment of the tobacco powder. According to the present invention, a unit to feed tobacco is provided in a manufacturing machine for the production of disposable cartridges for electronic cigarettes and a manufacturing machine provided with the feeding unit, as claimed in the appended claims.

The claims describe preferred embodiments of the present invention forming an integral part of the present description.

### BRIEF DESCRIPTION OF THE DRAWINGS

The present invention will now be described with reference to the attached drawings, which illustrate some non-limiting embodiments thereof, wherein:
- Figure 1 is a longitudinal section view of a cartridge for an electronic cigarette;
- Figure 2 is a perspective and schematic view of a manufacturing machine which produces the cartridge for the electronic cigarette of Figure 1;
- Figure 3 is a perspective view of the manufacturing machine of Figure 2 with the removal of some parts for clarity;
- Figure 4 is a perspective and schematic view of a tobacco feeding unit of the manufacturing machine of Figure 2; and
- Figure 5 is a schematic sectional view of part of the feeding unit of Figure 4.

### PREFERRED EMBODIMENTS OF THE INVENTION

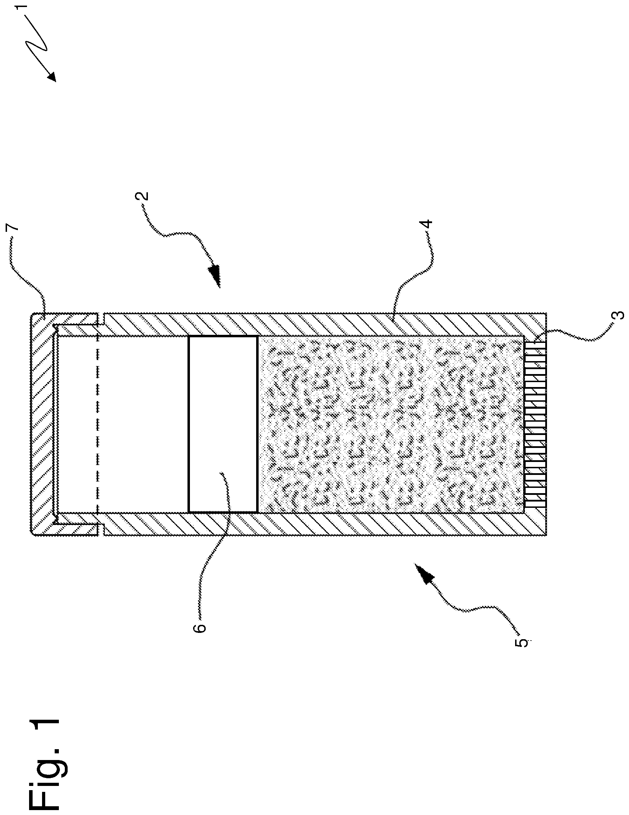

In Figure 1 number 1 denotes, as a whole, a disposable cartridge for electronic cigarettes. The disposable cartridge 1 comprises a tubular casing 2 made of a plastic material having a micro-perforated bottom wall 3 and a substantially cylindrical-shaped side wall 4; inside the tubular casing 2 a quantity 5 of powdered tobacco (in contact with the bottom wall 3) is contained, on top of which is a tab 6 of filtering material. Finally, the disposable cartridge 1 comprises a sealing ring 7 (i.e. a sealing washer 7) which is inserted around an upper end (otherwise completely open) of the tubular casing 2 so as to prevent the tab 6 of filtering material from escaping; preferably, the sealing ring 7 is welded to the tubular casing 2.

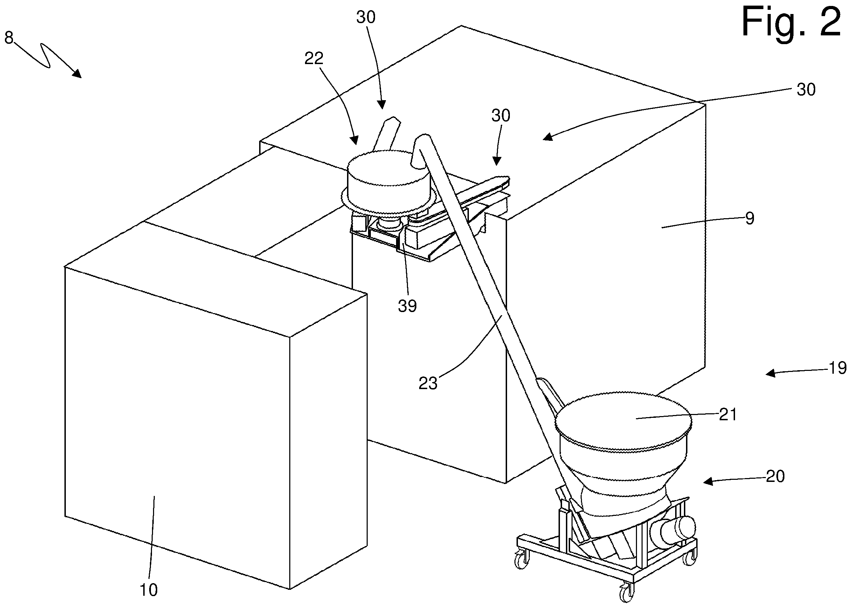

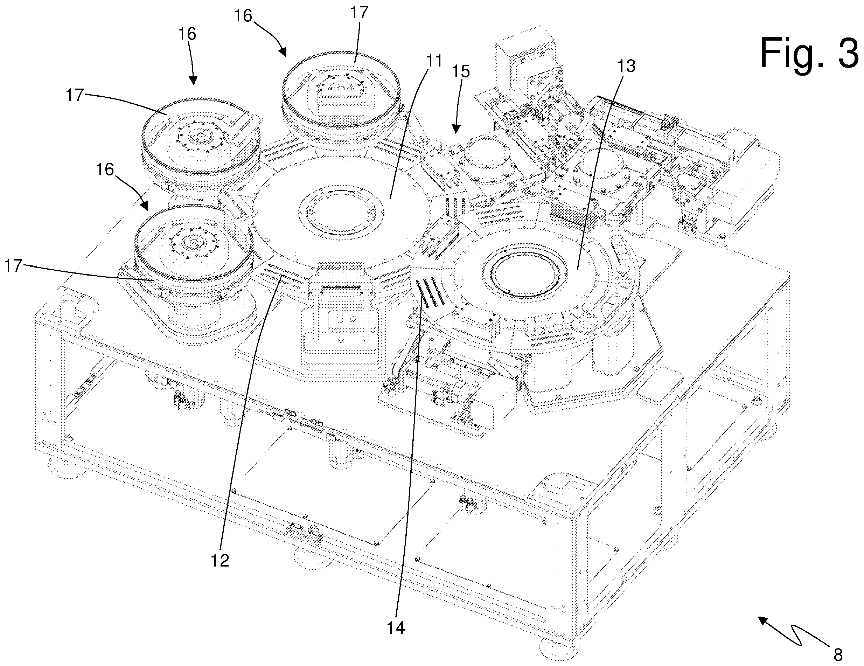

In Figures 2 and 3, number 8 denotes, as a whole, a manufacturing machine for the production of the disposable cartridges 1 described above.

The manufacturing machine 8 comprises a plurality of operating members (a part of which is illustrated in Figure 3) which interact one with the other and are provided with moving parts. Moreover, the manufacturing machine 8 comprises a parallelepiped-shaped protecting container 9 (and also provided with glass surfaces and openable doors) which encloses the operating members, both to protect the operating members and to prevent an operator from coming into contact with the operating members during the operation thereof. The manufacturing machine 8 further comprises an electric panel 10 which is arranged next to the protecting container 9 and contains the electric and electronic components.

As illustrated in Figure 3, the manufacturing machine 8 comprises a manufacturing drum 11 which is arranged horizontally and is mounted rotatably in a stepwise manner around a vertical rotation axis. The manufacturing drum 11 supports twelve groups of seats 12, each of which is adapted to receive and contain a corresponding tubular casing 2. The manufacturing machine 8 comprises a further manufacturing drum 13 which is arranged horizontally next to the manufacturing drum 11 and is mounted rotatably in a stepwise manner around a vertical rotation axis. The manufacturing drum 13 supports twelve groups of seats 14, each of which is adapted to receive and contain a corresponding tubular casing 2.

The manufacturing machine 8 comprises a feeding station, in which a feeding unit 15 inserts a corresponding empty tubular casing 2 into each seat 12 of a group standing still; in particular, the feeding unit 15 simultaneously inserts forty-two empty tubular casings 2 in as many seats 12 of a unit, which is standing still in the feeding station.

Downstream of the feeding station, with respect to the rotation direction of the manufacturing drum 11, three filling stations are arranged in succession in each of which a filling unit 16 is arranged, which feeds, into each tubular casing 2 carried by a seat 12 of a group standing still, a corresponding quantity 5 of tobacco; in particular, each filling unit 16 simultaneously feeds fourteen quantities 5 of tobacco into as many seats 12 of a unit standing still in the corresponding filling station. The filling unit 16 of the first feeding station feeds fourteen quantities 5 of tobacco into as many seats 12 of the innermost row of the group standing still in the first feeding station, the filling unit 16 of the second feeding station feeds fourteen quantities 5 of tobacco into as many seats 12 of the intermediate row of the group standing still in the second feeding station, and the filling unit 16 of the third feeding station feeds fourteen quantities 5 of tobacco into as many seats 12 of the outermost row of the group standing still in the third feeding station.

Each filling unit 16 is similar, in its general structure, to the filling unit described and illustrated in the patent applications WO2017051348A1, WO2017051349A1 and WO2017051350A1 to which we refer for a more detailed description of the filling unit 16.

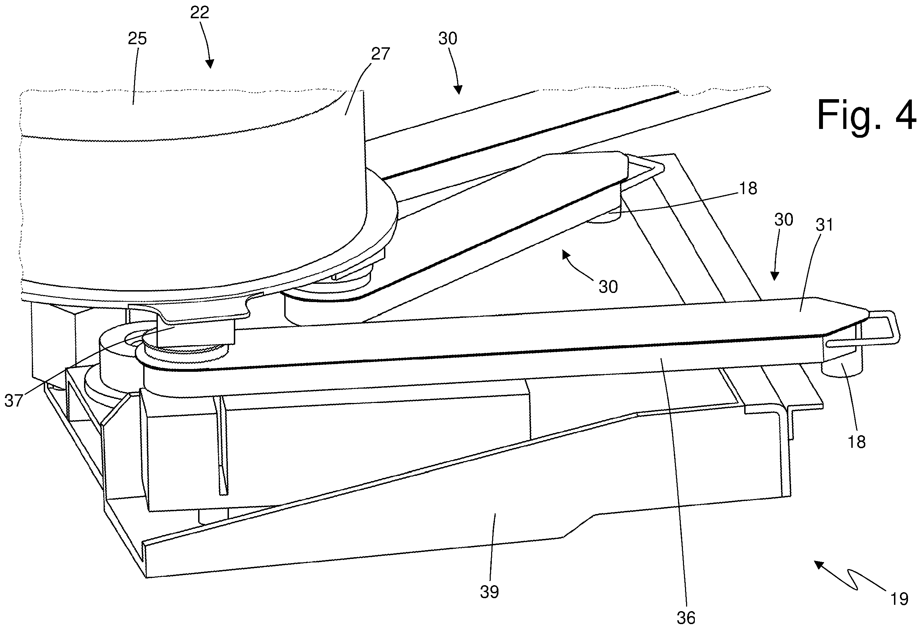

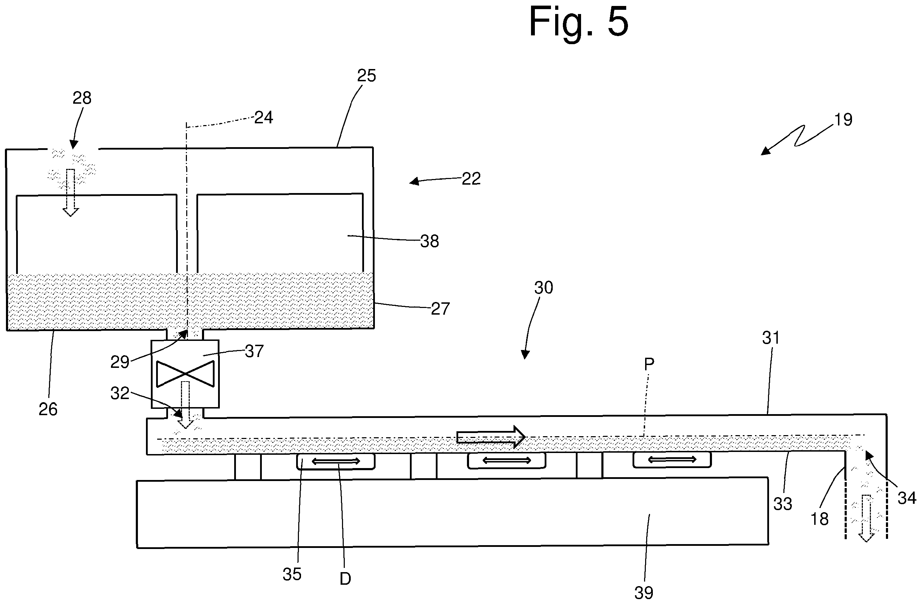

As illustrated in Figure 3, each filling unit 16 comprises a basin 17, for example having a cylindrical shape and open at the top. The basin 17 is for example arranged horizontally and is mounted rotatably in a stepwise manner around a vertical rotation axis. Each basin 17 is arranged next to the manufacturing drum 11 and partially overlaps the manufacturing drum 11 at the corresponding filling station. To each basin 17 a cylindrical-shaped descent channel 18 (partially illustrated in Figures 4 and 5) is coupled, which is vertically oriented and has an output opening arranged inside the basin 17; the descent channel 18 continuously feeds a flow of tobacco inside the basin 17, which forms a bed resting on the bottom of the basin 17.

As illustrated in Figure 2, the manufacturing machine 8 comprises a tobacco feeding unit 19, which feeds the powdered tobacco to the basins 17 of the three filling units 16 through the corresponding descent channels 18 (which form the terminal part of the feeding unit 19).

The feeding unit 19 comprises a lower basin 20 which is arranged next to the protecting container 9, is preferably mounted on a trolley provided with wheels (to be easily moved), and is provided with a removable cover 21 which is temporarily removed by an operator so as to pour a mass of powdered tobacco into the lower basin 20. The feeding unit 19 further comprises an upper tank 22 which is arranged above the protecting container 9 (hence higher than the basins 17 of the three filling units 16) and comprises an ascent channel 23 (inclined relative to the vertical direction) which takes the powdered tobacco from the lower basin 20 and moves the same to the upper tank 22. According to a preferred embodiment, the ascent channel 23 is formed by a closed tube inside in which an auger (i.e. an Archimedean screw) is arranged, which, by rotating, causes the tobacco powder to ascend.

As illustrated in Figure 5, the upper tank 22 is adapted to contain a tobacco mass and has a cylindrical shape having a central longitudinal axis 24. The upper tank 22 has an upper wall 25 having a circular shape, a bottom wall 26 having a circular shape, which is opposite to the upper wall 25, and a side wall 27 having a cylindrical shape. The upper wall 25 of the tank 22 has a single input through opening 28, through which the tobacco (coming from the ascent channel 23) enters by gravity into the upper tank 22. The bottom wall 26 of the tank 22 has three output through openings 29 (only one of which is illustrated in Figure 5), through which the tobacco exits, due to gravity, from the tank 22 and continues (as described in the following) towards the three descent channels 18.

As illustrated in Figure 4, the feeding unit 19 comprises three vibrating (and therefore also mentioned in the rest of this application as) moving conveyors 30, each arranged under the upper tank 22 in alignment with a corresponding output opening 29, adapted to receive the tobacco falling, due to gravity, through the output opening 29. As illustrated in Figure 5, each moving conveyor 30 is adapted to move the tobacco along a straight path P which starts at the output opening 29 of the tank 22 and ends at a descent channel 18. The three moving conveyors 30 are completely separate from and independent of one another, are activated independently of one another (i.e. the control of a moving conveyor 30 is completely independent of the control of the other two moving conveyors 30).

As illustrated in Figure 5, each moving conveyor 30 comprises an upper wall 31, which is aligned with a corresponding output opening 29 to receive the tobacco falling, due to gravity, through the output opening 29. Furthermore, each moving conveyor 30 comprises a bottom wall 33 which is parallel to and opposite to the upper wall 31 and provides a support for the tobacco which moves along the moving path P. According to a preferred embodiment, the bottom wall 33 of each moving conveyor 30 has an output opening 34 which is arranged at the end of the moving path P at a descent channel 18 so that the tobacco passes directly, due to gravity, from the feeding conveyor 30 to the descent channel 18. In other words, each moving path P extends from the input through opening 32 to the output opening 34 obtained through the bottom wall 33 at the end of the moving path P.

Each moving conveyor 30 is a vibrating conveyor (i.e. it moves the tobacco along the moving path P through a series of vibrations); therefore, the bottom wall 33 is mounted so as to vibrate along a vibration direction D and a series of actuators 35 are provided which are coupled to the bottom wall 33 and are designed to cause a vibration of the bottom wall 33 along the vibration direction D (i.e. a vibration directed horizontally). Preferably, the bottom wall 33 of each moving conveyor 30 is inclined with respect to the horizontal direction in favour of the moving path P and of an angle comprised between 1° and 6° (preferably less than 5°); in other words, the bottom wall 33 of each moving conveyor 30 is not perfectly horizontal, but is slightly inclined (1° - 6°) to be placed in a higher position at the input through opening 32 and to be arranged in a lower position at the output opening 34; in this way the combined action of the vibrations and of the gravity makes the tobacco move along the moving path P and towards the descent channel 18.

As illustrated in Figure 4, each moving conveyor 30 is closed (i.e. has walls which delimit a conveying space on all sides). In other words, each moving conveyor 30 comprises side walls 36 which are preferably arranged vertically (i.e. perpendicularly to the upper wall 31 and to the bottom wall 33) and extend from the bottom wall 33 to the upper wall 31 to give the moving conveyor 30 a closed shape. Generally, in each moving conveyor 30, the side walls 36 are (directly) connected to the upper wall 31 and are preferably made in a single body with the bottom wall 33 in order to ensure maximum hold of the tobacco.

As illustrated in Figure 5, a corresponding servo-controlled valve 37, which is arranged between the output opening 29 of the bottom wall 26 of the upper tank 22 and the input through opening 32 of the moving conveyor 30 is coupled to each moving conveyor 30.

The servo-controlled valve 37 comprises for example a plurality of pockets or couvettes angularly arranged one with the other and rotatable about a common axis. When the servo-controlled valve 37 is activated, the pockets or couvettes are rotated and transfer the tobacco to the moving conveyor 30, whereas when the servo-controlled valve 37 is deactivated, the rotating movement is stopped, preventing the transfer (the descent by gravity) of the tobacco towards the moving conveyor 30. The function of the servo-controlled valves 37 is therefore to interrupt (automatically) the flow of tobacco that descends by gravity towards the conveyors 30 when the moving conveyors 30 are not in operation, i.e. when it is not necessary to feed tobacco to the basins 17 of the filling units 16 because the manufacturing machine 8 is standing still or because the basins 17 are sufficiently full (typically when the manufacturing machine 8 operates at reduced speed and therefore consumes little tobacco); in this way it is possible to avoid to accumulate too much tobacco on the bottom wall 33 of each conveyor 30, especially at the input through opening 32. The accumulation of too much tobacco on the bottom wall 33 of each moving conveyor 30 must be avoided both because it could subject the tobacco on the bottom to an excessive compression (which is harmful because it can deteriorate the powdered tobacco), and because a bed of tobacco that is too high is very difficult to move along the vibrating moving conveyor 30 when the vibrating moving conveyor 30 is put back into operation. In other words, each servo-controlled valve 37 is deactivated when the corresponding moving conveyor 30 is stopped and is activated when the moving conveyor 30 is active.

According to a preferred but non-binding embodiment illustrated in Figure 5, the upper tank 22 comprises some (typically two to four) stirring blades 38 which are arranged inside the upper tank 22 and rotate cyclically around the axis 24 The function of the stirring blades 38 is to distribute the tobacco inside the upper tank 22 so as to cyclically push the tobacco, which comes from the ascent channel 23 and enters from the input through opening 28, towards the three output openings 29. According to a preferred, but non-binding, embodiment illustrated in Figure 4, the feeding unit 19 comprises a common support member 39 which is mounted on an upper wall of the protecting container 9 and entirely supports the three moving conveyors 30 and the upper tank 22 so that the three moving conveyors 30 and the upper tank 22 are simultaneously removed by dismantling the support member 39. In the event of a format change involving the change in the type of tobacco used, it is possible to dismantle the support member 39 together with the three moving conveyors 30 and the upper tank 22 to replace the support member 39 (hence the three moving conveyors 30 and the upper tank 22) previously used with a new support member 39 (hence new moving conveyors 30 and new upper tank 22) intended for moving the new type of tobacco. Moreover, the dismantled support member 39 together with the three moving conveyors 30 and the upper tank 22 are brought to the floor level and can therefore be cleaned and washed in a very easy and fast way to be reassembled following the next size change; in other words, it is very complex to clean and wash the upper tank 22 and the three moving conveyors 30 over the protecting container 9 both because of the high ground clearance (at least two meters), and because one must always be very careful to do not let debris or liquids fall onto the underlying manufacturing machine 8; instead, once a supporting member 39 is removed together with the three moving conveyors 30 and the upper tank 22, the cleaning thereof becomes very simple because it can be made in a dedicated cleaning area.

The feeding unit 19 described above has numerous advantages.

In the first place, the feeding unit 19 described above enables an adequate quantity of tobacco to be fed to the basins 17 of the three filling units 16 in all operating conditions (both when the manufacturing machine 8 operates at reduced speed, and when the manufacturing machine 8 operates at nominal speed, i.e. at maximum speed).

Moreover, the feeding unit 19 described above guarantees a very delicate treatment of the powdered tobacco avoiding, at all possible speeds, to excessively compress the powdered tobacco (an excessive compression can deteriorate the tobacco powder thus depleting the aromas and, consequently, the powdered tobacco deprived of the aromas is impoverished and gives the smoker the impression that it has already been previously smoked).

The feeding unit 19 described above is particularly compact and allows to carry out the format changes when it is necessary to change the type of tobacco in a quick and simple way.

Finally, the feeding unit 19 described above is relatively simple and inexpensive to implement in that it is composed of a limited number of parts that are readily available on the market or can be manufactured with standard mechanical processes.

### LIST OF REFERENCE NUMBERS OF THE FIGURES

1 disposable cartridge
2 tubular casing
3 bottom wall
4 side wall
5 quantity of tobacco
6 tab of filtering material
7 sealing ring
8 manufacturing machine
9 protecting container
10 electrical panel
11 manufacturing drum
12 seats
13 manufacturing drum
14 seats
15 feeding unit
16 filling unit
17 basin
18 descent channel
19 feeding unit
20 lower basin
21 cover
22 upper basin
23 ascent channel
24 longitudinal axis
25 upper wall
26 bottom wall
27 side wall
28 input opening
29 output opening
30 conveyor
31 upper wall
32 input opening
33 bottom wall
34 output opening
35 actuator
36 side walls
37 servo-controlled valve
38 blade
39 support member
D direction
P moving path

## Claims

1. A feeding unit (19) for feeding tobacco to a manufacturing machine (8) for the production of disposable cartridges (1) for electronic cigarettes; the feeding unit (19) comprising:
a tank (22), which is designed to contain a tobacco mass and has a first bottom wall (26) provided with at least a first output through opening (29); and
at least one conveyor (30), which is arranged under the tank (22) in alignment with the first output opening (29), is designed to receive the tobacco falling, due to gravity, through the first output opening (29), and is designed to move the tobacco along a moving path (P);
wherein the conveyor (30) is a vibrating conveyor and comprises: a second bottom wall (33) mounted so as to vibrate along a vibration direction (D), side walls (36) arranged vertically and extending from the second bottom wall (33), and at least one actuator (35), which is coupled to the second bottom wall (33) and is designed to cause a vibration of the second bottom wall (33) along the vibration direction (D); the feeding unit (19) being
**characterized in that:**
the conveyor (30) comprises a second upper wall (31), which has a second input through opening (32), which is aligned with the first output opening (29);
the side walls (36) extend from the second bottom wall (33) to the second upper wall (31) so as to give the conveyor (30) a closed shape;
the feeding path (P) extends from the second input opening (32) to a second output opening (34) made through the second bottom wall (33) at the end of the moving path (P);
the feeding unit (19) comprises a servo-controlled valve (37), which is arranged between the first output opening (29) of the first bottom wall (26) of the tank (22) and the conveyor (30) and can be activated to transfer the tobacco towards the conveyor (30) or, alternatively, can be deactivated to prevent the tobacco from falling, due to gravity, towards the conveyor (30); whereby
the servo-controlled valve (37) is automatically deactivated when the conveyor (30) is standing still and is automatically activated when the conveyor (30) is active.

2. The feeding unit (19) according to claim 1, wherein the tank (22) comprises a first upper wall (25), which is opposite to the first bottom wall (26) and has one single first input through opening (28), through which the tobacco enters the tank (22) .

3. The feeding unit (19) according to claim 1 or 2, wherein the second bottom wall (33) has a second output opening (34) arranged at the end of the moving path (P).

4. The feeding unit (19) according to claim 3 and comprising a descent channel (18) where the tobacco descends due to gravity and which is arranged vertically as well as originates from the second output opening (34) of the second bottom wall (33).

5. The feeding unit (19) according to one of the claims from 1 to 4, wherein the second bottom wall (33) is inclined relative to the horizontal in favour of the moving path (P) and by an angle ranging from 1° to 6°.

6. The feeding unit (19) according to one of the claims from 1 to 5 and comprising at least two conveyors (30), which are completely separate from and independent of one another, are activated independently of one another, and receive the tobacco from two first output openings (29) arranged in different positions of the first bottom wall (26) of the tank (22) .

7. The feeding unit (19) according to one of the claims from 1 to 6 and comprising a support body (39), which is designed to be mounted on the manufacturing machine (8) and entirely supports the conveyor (30) and the tank (22) so that, by disassembling the support body (39), the entire conveyor (30) and the tank (22) are removed.

8. A manufacturing machine (8) for the production of disposable cartridges (1) for electronic cigarettes, comprising:
a manufacturing drum (11), which is arranged horizontally, is mounted rotatably in a stepwise manner around a vertical rotation axis and supports a plurality of groups of seats (12), each designed to receive and contain a corresponding tubular casing (2);
a feeding station where a feeding unit (15) inserts a corresponding tubular casing (2) into each seat (12) of a group standing still; and
at least one filling station, which is arranged downstream of the feeding station and where a filling unit (16) is provided, which feeds a corresponding quantity (5) of tobacco into each tubular casing (2) carried by a seat (12) of a group standing still;
wherein the filling unit (16) comprises a basin (17) and the feeding unit (19) according to any one of the preceding claims, which feeds the tobacco to the basin (17).

## Patentansprüche

1. Zuführeinheit (19) zum Zuführen von Tabak zu einer Produktionsmaschine (8) für die Produktion von Wegwerfpatronen (1) für
elektronische Zigaretten; wobei die Zuführeinheit (19) umfasst:
einen Tank (22), der ausgelegt ist, um eine Tabakmasse zu enthalten, und der eine erste untere Wand (26) hat, die mit wenigstens einer ersten Ausgabedurchgangsöffnung (29) versehen ist; und
wenigstens einen Förderer (30), der unter dem Tank (22) ausgerichtet auf die erste Ausgabeöffnung (29) angeordnet ist und ausgelegt ist, um den Tabak aufzunehmen, der aufgrund von Schwerkraft durch die erste Ausgabeöffnung (29) fällt, und ausgelegt ist, um den Tabak längs eines Bewegungspfads (P) zu bewegen;
wobei der Förderer (30) ein Schwingförderer ist und umfasst: eine zweite untere Wand (33), die so montiert ist, um in einer Schwingungsrichtung (D) zu schwingen, Seitenwände (36), die vertikal angeordnet sind und sich von der zweiten unteren Wand (33) erstrecken, und wenigstens einen Aktuator (35), der mit der zweiten unteren Wand (33) gekoppelt ist und ausgelegt ist, um eine Schwingung der zweiten unteren Wand (33) längs der Schwingungsrichtung (D) zu bewirken;
wobei die Zuführeinheit (19) **dadurch gekennzeichnet ist, dass**:
der Förderer (30) eine zweite obere Wand (31) umfasst, die eine zweite Eingabedurchgangsöffnung (32) hat, die auf die erste Ausgabeöffnung (29) ausgerichtet ist;
die Seitenwände (36) von der zweiten unteren Wand (33) zu der zweiten oberen Wand (31) verlaufen, um dem Förderer (30) eine geschlossene Form zu verleihen;
der Zuführpfad (P) von der zweiten Eingabeöffnung (32) zu einer zweiten Ausgabeöffnung (34), die durch die zweite untere Wand (33) am Ende des Bewegungspfads (P) ausgebildet ist, verläuft;
wobei die Zuführeinheit (19) ein servogesteuertes Ventil (37) umfasst, das zwischen der ersten Ausgabeöffnung (29) der ersten unteren Wand (26) des Tanks (22) und dem Förderer (30) angeordnet ist und aktiviert werden kann, um den Tabak zu dem Förderer (30) zu transferieren, oder alternativ deaktiviert werden kann, um zu verhindern, dass der Tabak aufgrund von Schwerkraft zu dem Förderer (30) fällt; wobei
das servogesteuerte Ventil (37) automatisch deaktiviert wird, wenn der Förderer (30) stillsteht, und automatisch aktiviert wird, wenn der Förderer (30) aktiv ist.

2. Zuführeinheit (19) nach Anspruch 1, wobei der Tank (22) eine erste obere Wand (25) umfasst, die sich gegenüber der ersten unteren Wand (26) befindet und eine einzige erste Eingabedurchgangsöffnung (28) hat, durch die der Tabak in den Tank (22) eintritt.

3. Zuführeinheit (19) nach Anspruch 1 oder 2, wobei die zweite untere Wand (33) eine zweite Ausgabeöffnung (34) hat, die am Ende des Bewegungspfads (P) angeordnet ist.

4. Zuführeinheit (19) nach Anspruch 3 und umfassend einen Fallkanal (18), in dem der Tabak aufgrund von Schwerkraft herabfällt, und der vertikal angeordnet ist und von der zweiten Ausgabeöffnung (34) der zweiten unteren Wand (33) entspringt.

5. Zuführeinheit (19) nach einem der Ansprüche 1 bis 4, wobei die zweite untere Wand (33) relativ zur Horizontalen zum Bewegungspfad (P) hin und um einen Winkel im Bereich von 1° bis 6° geneigt ist.

6. Zuführeinheit (19) nach einem der Ansprüche 1 bis 5 und umfassend wenigstens zwei Förderer (30), die vollständig getrennt voneinander und unabhängig voneinander sind, unabhängig voneinander aktiviert werden und den Tabak von zwei ersten Ausgabeöffnungen (29) erhalten, die bei verschiedenen Positionen der ersten unteren Wand (26) des Tanks (22) angeordnet sind.

7. Zuführeinheit (19) nach einem der Ansprüche 1 bis 6 und umfassend einen Trägerkörper (39), der so ausgelegt ist, um an der Produktionsmaschine (8) zu werden, und den Förderer (30) und den Tank (22) vollständig trägt, so dass bei Demontage des Trägerkörpers (39) der gesamte Förderer (30) und der Tank (22) entfernt werden.

8. Produktionsmaschine (8) für die Produktion von Wegwerfpatronen (1) für elektronische Zigaretten umfassend:
eine Produktionstrommel (11), die horizontal angeordnet ist, schrittweise drehbar um eine vertikale Drehachse montiert ist und mehrere Gruppen von Aufnahmen (12) trägt, wovon jede ausgelegt ist, um ein entsprechendes rohrförmiges Gehäuse (2) aufzunehmen und zu halten;
eine Zuführstation, bei der eine Zuführeinheit (15) ein entsprechendes rohrförmiges Gehäuse (2) in jede Aufnahme (12) einer stillstehenden Gruppe einsetzt; und
wenigstens eine Füllstation, die stromabwärts der Zuführstation angeordnet ist, und bei der eine Fülleinheit (16) vorgesehen ist, die in jedes rohrförmige Gehäuse (2), das durch eine Aufnahme (12) einer stillstehenden Gruppe getragen wird, eine entsprechende Menge (5) an Tabak zuführt;
wobei die Fülleinheit (16) einen Behälter (17) und die Zuführeinheit (19) nach einem der vorhergehenden Ansprüche, die dem Behälter (17) den Tabak zuführt, umfasst.

## Revendications

1. Unité d'alimentation (19) pour alimenter en tabac une machine de fabrication (8) pour la production de cartouches jetables (1) pour cigarettes électroniques ; l'unité d'alimentation (19) comprenant :
un réservoir (22), qui est conçu pour contenir une masse de tabac et qui comporte une première paroi inférieure (26) pourvue d'au moins une première ouverture traversante de sortie (29) ; et
au moins un convoyeur (30), qui est agencé au-dessous du réservoir (22) en alignement avec la première ouverture de sortie (29), est conçu pour recevoir le tabac tombant, par gravité, à travers la première ouverture de sortie (29), et est conçu pour déplacer le tabac le long d'un trajet de déplacement (P) ;
dans laquelle le convoyeur (30) est un convoyeur vibrant et comprend : une deuxième paroi inférieure (33) montée de manière à vibrer le long d'une direction de vibration (D), des parois latérales (36) agencées verticalement et s'étendant depuis la deuxième paroi inférieure (33), et au moins un actionneur (35), qui est couplé à la deuxième paroi inférieure (33) et est conçu pour provoquer une vibration de la deuxième paroi inférieure (33) le long de la direction de vibration (D) ;
l'unité d'alimentation (19) étant **caractérisée en ce que** :
le convoyeur (30) comprend une deuxième paroi supérieure (31), qui comporte une deuxième ouverture traversante d'entrée (32), qui est alignée avec la première ouverture de sortie (29) ;
les parois latérales (36) s'étendent depuis la deuxième paroi inférieure (33) jusqu'à la deuxième paroi supérieure (31) de manière à conférer au convoyeur (30) une forme fermée ;
le trajet d'alimentation (P) s'étend depuis la deuxième ouverture d'entrée (32) jusqu'à une deuxième ouverture de sortie (34) constituée à travers la deuxième paroi inférieure (33) à la fin du trajet de déplacement (P) ;
l'unité d'alimentation (19) comprend
une vanne à servocommande (37), qui est agencée entre la première ouverture de sortie (29) de la première paroi inférieure (26) du réservoir (22) et le convoyeur (30) et qui peut être activée pour transférer le tabac vers le convoyeur (30) ou, en variante, qui peut être désactivée pour interdire au tabac de tomber, par gravité, vers le convoyeur (30) ; de telle manière que
la vanne à servocommande (37) soit automatiquement désactivée lorsque le convoyeur (30) est immobile et soit automatiquement activée lorsque le convoyeur (30) est actif.

2. Unité d'alimentation (19) selon la revendication 1, dans laquelle le réservoir (22) comprend une première paroi supérieure (25), qui est à l'opposé de la première paroi inférieure (26) et qui comporte une première ouverture traversante d'entrée (28) unique, à travers laquelle le tabac entre dans le réservoir (22).

3. Unité d'alimentation (19) selon la revendication 1 ou 2, dans laquelle la deuxième paroi inférieure (33) comporte une deuxième ouverture de sortie (34) agencée à la fin du trajet de déplacement (P).

4. Unité d'alimentation (19) selon la revendication 3 et comprenant un canal de descente (18) où le tabac descend par gravité et qui est agencé verticalement et qui provient de la deuxième ouverture de sortie (34) de la deuxième paroi inférieure (33).

5. Unité d'alimentation (19) selon l'une des revendications 1 à 4, dans laquelle la deuxième paroi inférieure (33) est inclinée par rapport à l'horizontale vers le trajet de déplacement (P) et d'un angle dans une plage de 1° à 6°.

6. Unité d'alimentation (19) selon l'une des revendications 1 à 5 et comprenant au moins deux convoyeurs (30), qui sont complètement distincts et indépendants l'un de l'autre, sont activés indépendamment l'un de l'autre et reçoivent le tabac depuis deux premières ouvertures de sortie (29) agencées à différentes positions de la première paroi inférieure (26) du réservoir (22).

7. Unité d'alimentation (19) selon l'une des revendications 1 à 6 et comprenant un corps de support (39), qui est conçu pour être monté sur la machine de fabrication (8) et supporte entièrement le convoyeur (30) et le réservoir (22) de sorte que, par le démontage du corps de support (39), le convoyeur (30) complet et le réservoir (22) soient déposés.

8. Machine de fabrication (8) pour la production de cartouches jetables (1) pour cigarettes électroniques, comprenant :
un tambour de fabrication (11), qui est agencé horizontalement, est monté rotatif d'une manière progressive autour d'un axe de rotation vertical et supporte une pluralité de groupes de sièges (12), chacun d'eux étant conçu pour recevoir et contenir un boîtier tubulaire (2) correspondant ;
une station d'alimentation où une unité d'alimentation (15) insère un boîtier tubulaire (2) correspondant dans chaque siège (12) d'un groupe immobile ; et
au moins une station de remplissage, qui est agencée en aval de la station d'alimentation et où une unité de remplissage (16) est prévue, qui alimente en tabac d'une quantité correspondante (5) chaque boîtier tubulaire (2) porté par un siège (12) d'un groupe immobile ;
dans laquelle l'unité de remplissage (16) comprend un bassin (17) et l'unité d'alimentation (19) selon l'une quelconque des revendications précédentes, qui alimente en tabac le bassin (17).
